# EUROPEAN PATENT APPLICATION

(11) **EP 1 795 569 A1**
(43) Date of publication of application: **13.06.2007**
(21) Application number: 05767395.6
(22) Date of filing: 27.07.2005
(51) Int. Cl.: C09K 3/00, C08G 77/60

(54) **GELLING AGENT**

(30) Priority: 26.08.2004 JP 2004247524
(71) Applicant: Japan Science and Technology Agency, Kawaguchi-shi, Saitama 332-0012 (JP)
(72) Inventor: FUJIKI, Michiya, Ikoma-shi, 630-0101 Nara (JP); KAWABE, Takuma, Ikoma-shi, 630-0101 Nara (JP); NAITO, Masanobu, Ikoma-shi, 630-0101 Nara (JP)
(74) Representative: Bittner, Thomas L.
(86) International application number: PCT/JP2005/013751
(87) International publication number: WO 2006/022111

(57) **Abstract**

A gelatinizer according to the present invention contains polysilane having a silicon main chain with side chain having fluorine. In the polysilane, the fluorine (F) of the side chain and the silicon (Si) of the main chain interact with each other in state of Si ··· F-C or the like, and the fluorine (F) of the side chain and the hydrogen (H) of the side chain interact with each other in state of C-H ··· F-C or the like. The interactions simultaneously occur within a single molecule of the polysilane. With such a composition of polysilane, the gelatinizer of the present invention causes the molecules to interact with each other in the domain of Si ... F-C interaction in the same manner of the foregoing interactions in a single molecule. Consequently ligand crosslinking occurs among polymer chain, and a network for gelation is formed. The gelatinizer of the present invention thus ensures gelation property for a polar solvent which blocks formation of hydrogen bond, and also ensures high stability of resultant gel.

## Description

### TECHNICAL FIELD

The present invention relates to a gelatinizer containing polysilane having a backbone structure formed from silicon, particularly relates to a gelatinizer to gelate a solvent, such as an organic solvent.

### BACKGROUND ART

"Gel" generally designates a matter between solid and liquid, and usually has a three-dimensional network which incorporates a solvent. The three-dimensional network is formed by crosslinking of gelatinizer. Gel is classified into two types depending on the solvents. One of them is hydrogel using an aqueous solution as a solvent, and another is organogel using organic solvents.

Such a gelatinizer for converting liquid into gel is frequently used in the daily life. A typical example is a gelatinizer for gelating an aqueous solution (occasionally called a hydrogel-gelatinizer), which is used for food such as agar, jelly; industrial products such as rubber, photo film, high-absorbent-resin or chromatography; or medical materials such as soft contact lens, artificial corpus vitreum or the like.

On the other hand, a gelatinizer for gelating organic solvents (occasionally called an organogel-gelatinizer), is typically used for collecting agents for oil slick, or waste oil disposal agents for household use.

In recent years, the gelatinizers, particularly, the gelatinizers for gelating organic solvent have been attracting attention as the environment problem is becoming more serious, and the needs of gelatinizers is therefore increasing.

Under such circumstance, Document 1 (Sugiyasu K., Org. Biomol. Chem., 2003, 1, 895) and Document 2 (Hanabusa K., Langmuir, 2003, 19, 8622) disclose inventions of gelatinizers for gelating organic solvents. Examples of typical gelatinizer includes 1, 2, 3, 4-dibenziliden-D-sorbitol, 12-hydroxystearic acid, cholesterol derivative, amino acid derivative, ammonia derivative, cholic acid derivative, anthracene derivative, etc.

However, the gelatinizer for gelating an organic solvent has a defect. The gelatinizer is incapable of gelating a polar solvent which inhibits formation of hydrogen bonding.

More specifically, as described, a typical gelatinizer for gelating an organic solvent is a low molecular compound such as 1, 2, 3, 4-dibenziliden-D-sorbitol, 12-hydroxystearic acid, cholesterol derivative, amino acid derivative, ammonia derivative, cholic acid derivative, anthracene derivative, etc. In this gelatinizer of low molecule compound, the network of gel is formed mainly by a relatively weak bond, such as hydrogen bond. Therefore, the gelatinizer for gelating an organic solvent is incapable of gelating polar solvents, as the polar solvent blocks formation of hydrogen bond.

Further, since, as described above, such a gelatinizer of low molecule compound is formed by a relatively weak bond, and therefore not sufficiently stable because the gel produced through gelation tends to change itself into more stable state, such as crystal or precipitation.

Further, since, as described above, the gelatinizer of low molecule compound is produced by complex synthesis process through a large number of manufacturing steps. The manufacturing time thus becomes longer, and the production efficiency is quite low.

Further, the type of gelatinizer for gelating an organic solvent is significantly limited compared with the gelatinizer for gelating an aqueous solution. For this reason, the gelatinizer for gelating an organic solvent is more expensive than the gelatinizer for gelating an aqueous solution.

The present invention is made in view of the foregoing conventional problems, and an object is to provide a gelatinizer which ensures gelation property for polar solvents which inhibits formation of hydrogen bond, and also ensures high stability of resultant gel.

### DISCLOSURE OF INVENTION

As a result of intensive study in view of the foregoing problem, the inventors of the present invention have found that polysilane, which is generated by polymerization of dichlorosilane containing silicon and fluorine, has a gelation property. The inventors completed the present invention on the basis of this finding.

A gelatinizer according to the present invention contains polysilane resulting from polymerization of a silicon compound with a fluoroalkyl group which has as a side chain a fluoroalkyl group which results from replacement of at least one hydrogen of a fluoroalkyl group.

The gelatinizer preferably has such a characteristic that the polysilane has a structure expressed by the following formula (1), 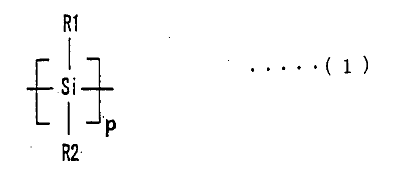 where side chains R1 and R2 are alkyl groups, at least one of which is a fluoroalkyl group which results from replacement of at least one hydrogen of an alkyl group with fluorine, and p expresses an integer not less than 6.

In the gelatinizer according to the present invention, the fluoroalkyl group is preferably a trifluoropropyl group.

As described above, the gelatinizer according to the present invention contains polysilane resulting from polymerization of a silicon compound with a fluoroalkyl group which has as a side chain a fluoroalkyl group which results from replacement of at least one hydrogen of an alkyl group with fluorine. Therefore, in a single molecule of the polysilane, the fluorine (F) of the fluoroalkyl group in the side chain and the silicon (Si) in the main chain (silicon compound with a fluoroalkyl group) of the polysilane interact with F to form Si ··· F-C interaction. Further, in the case where the R1 and R2 in the formula (1) are a trifluoropropyl group and a methyl group, respectively, (i) interaction between the F element of the side chain group and the Si element of the main chain interact with each other in state of Si ··· F-C or the like, and (ii) interaction between the F element of the side chain and the H element of the methyl group in state of C-H ··· F-C or the like simultaneously occur within a single molecule. That is, with such a composition of polysilane, the gelatinizer of the present invention causes the molecules to interact with each other in the domain of Si ··· F-C interaction in the same manner of the foregoing interaction in a single molecule of the polysilane. In this way ligand crosslinking occurs among polymer chain.

More specifically, the gelatinizer of the present invention causes the molecules to be interacted with each other in the same manner above, i.e., (i) the interaction between the fluorine of the side chain and the silicon of the main chain, and (ii) the interaction between the fluorine of the side chain and the hydrogen of the side chain. In this way ligand crosslinking occurs among polymer chain, and a network for gelation is formed.

Note that, as described above, "the silicon compound with a fluoroalkyl group" in this specification designates a silicide which has as a side chain a fluoroalkyl group which results from replacement of at least one hydrogen of an alkyl group with fluorine. That is, the fluorine is not coupled with silicon of the silicide, but is contained in the alkyl group of the side chain of the silicide.

With this structure, the gelatinizer according to the present invention is capable of gelation of various kinds of solvent. More specifically, the gelatinizer according to the present invention is capable of gelating organic solvents, including a polar solvent of ether, and a polar solvent of alkyl halide.

Note that, the "polar solvent of ether" in this specification designates a solvent made of a polar molecule having an ether bond, except for a solvent containing an element (oxygen, nitrogen, fluorine) which interacts with a Si. Further, the "polar solvent with alkyl halide" in this specification designates a solvent made of molecules with alkyl group in which at least one hydrogen is replaced with halogen, except for a solvent containing an element (oxygen, nitrogen, fluorine) which interacts with a Si.

More specifically, the gelatinizer of the present invention causes the molecules to be interacted with each other in the same manner as the foregoing interactions in a single molecule of polysilane, i.e., (i) the interaction between the fluorine of the side chain and the silicon of the main chain, and (ii) the interaction between the fluorine of the side chain and the hydrogen of the side chain. In this way ligand crosslinking occurs among polymer chain, and a network for gelation is formed. Thus, the gelatinizer of the present invention ensures gelation property for a polar solvent which was not gelated by a general conventional gelatinizer for gelating an organic solvent.

More specifically, the conventional gelatinizer for gelating an organic solvent forms the gelation network by hydrogen bond, and therefore incapable of gelating an organic solvent which blocks formation of hydrogen bond (such as polar solvent). In contrast to this conventional gelatinizer for an organic solvent, the gelatinizer according to the present invention mainly forms the gelation network by the interaction between fluorine and silicon. Therefore, the gelatinizer of the present invention is capable of formation of network, in other words, capable of gelation, even with an organic solvent which blocks formation of hydrogen bond (polar solvent).

Note that, the organic solvent which blocks formation of hydrogen bond (polar solvent) may be an polar solvent of ether or an polar solvent of alkyl halide which are explained above. Further, tetrahydrofuran (THF) is included in the category of polar solvent of ether in the present invention. An example of the alkyl halide solvent may be chloroform. The gelatinizer according to the present embodiment is capable of gelation of polar solvent, which cannot be gelated by the conventional gelatinizer for gelating an organic solvent. Therefore, the gelatinizer according to the present invention is applicable to a larger variation of organic solvent than the conventional gelatinizer.

Further, as described, the conventional gelatinizer for gelating an organic solvent is generally made of a low-molecule compound. Because of this, the organic solvent gel formed by the conventional gelatinizer for gelating an organic solvent tends to change itself into more stable state, such as crystal or precipitation. The crystallisation or precipitation of the resulting gel thus easily occurs, thereby decreasing gelation property.

On the other hand, the gelatinizer according to the present embodiment contains polysilane resulting from polymerization of a silicon compound with a fluoroalkyl group which has as a side chain a fluoroalkyl group which results from replacement of at least one hydrogen of an alkyl group with fluorine. With this characteristic the gelatinizer is applicable to a large variation of organic solvent. Thus, an organic gel produced by the gelatinizer according to the present invention has a stable polymer chain network, and is immune to crystallisation or precipitation.

Accordingly, the gelatinizer according to the present embodiment has superior gelation property compared with the conventional gelatinizer for gelating an organic solvent.

Further, with such a stable gelation state, the resulting gel (organogel) of gelation of organic solvent using the gelatinizer according to the present embodiment can be easily collected.
The gelatinizer according to the present invention preferably has such a characteristic that one of the two side chains of the silicon compound with a fluoroalkyl group is a fluoroalkyl group while the other is an alkyl group having a β-branch structure or a γ-branch structure containing 4 or more carbons.

With this feature, the gelatinizer according to the present invention contains polysilane having a large amount of molecules with a β-branch structure or a γ-branch structure containing 4 or more carbons. Typical examples of the fluoroalkyl group having a β-branch structure or a γ-branch structure containing 4 or more carbons includes an isobutyl group.

In addition to the described structure, the gelatinizer offering such an effect may have the following structure.

More specifically, the gelatinizer according to the present invention contains polysilane resulting from polymerization of two monomers: (i) silicon compound with a fluoroalkyl group which as a side chain has a fluoroalkyl group which results from replacement of at least one hydrogen of an alkyl group with fluorine, and (ii) a silicide having as a side chain an alkyl group which may contain fluorine. Further, the gelatinizer preferably has such a feature that the polysilane has (i) a structure expressed by the following formula (2), 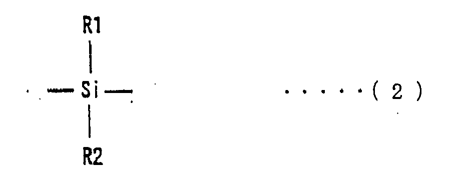 where side chains R1 and R2 are alkyl groups, at least one of which is a fluoroalkyl group which results from replacement of at least one hydrogen of an alkyl group with fluorine,
and (ii) a structure expressed by the following formula (3), 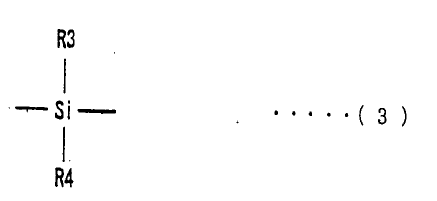 where side chains R3 and R4 are alkyl groups which may contain fluorine, and at least one of them has a different structure to the side chains R1 and R2. Further, one of the side chains is preferably the fluoroalkyl group while the other is an alkyl group having a β-branch structure and γ-branch structure containing 4 or more carbons.

This gelatinizer also causes the molecules interact with each other in the manner of the interaction between fluorine in the side chain and the silicon in the main chain and the interaction of the fluorine and the hydrogen in the side chain in a single molecule of the foregoing polysilane. In this way ligand crosslinking occurs among polymer chain.

More specifically, the gelatinizer according to the present invention preferably has such a feature that the polysilane has a structure expressed by the following formula (4), 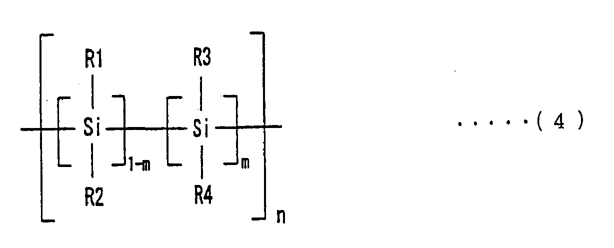 where side chains R1 and R2 are alkyl groups, at least one of which is a fluoroalkyl group which results from replacement of at least one hydrogen of an alkyl group with fluorine; side chains R3 and R4 are alkyl groups which may contain fluorine, at least one of them has a different structure to the side chains R1 and R2; n is an integer not less than 2; and m satisfies 0.001 ≤ m ≤ 0.999.As described, the gelatinizer according to the present invention contains polysilane having a polymeric molecular structure (polymer compound). The gelatinizer according to the present invention therefore can be produced by a easier method than the method of producing the conventional gelatinizer for gelating an organic solvent.

For example, the foregoing gelatinizer containing the polysilane constituted of a silicon compound with a fluoroalkyl group and silicide can be manufactured by desalination condensation of the silicon compound with a fluoroalkyl group and the silicide in an organic solvent using an alkali metal or an alloy of alkali metal.

As described, the conventional gelatinizer for gelating an organic solvent is a low-molecule compound, and therefore its production (synthesis) is complicated, and requires many separate processing steps. Because of the many processing steps the production takes a long time, resulting in low efficiency and a low yield. On the other hand, the gelatinizer according to the present invention may be easily produced by the foregoing method.

Therefore, the gelatinizer according to the present embodiment manufactured through such an easy method has a certain advantage such as mass production. For this reason the manufacturing cost can be greatly reduced compared to the conventional gelatinizer for producing organogel.

Additional objects, features, and strengths of the present invention will be made clear by the description below. Further, the advantages of the present invention will be evident from the following explanation in reference to the drawings.

### BRIEF DESCRIPTION OF DRAWINGS

Figure 1 is a schematic view showing interaction of silicon and fluorine in a gelatinizer according to one embodiment of the present invention.
Figure 2 is a schematic view showing a network of gelatinizer according to one embodiment of the present invention.

### BEST MODE FOR CARRYING OUT THE INVENTION

The following will explain one embodiment of the present invention. The present invention is however not limited to the scope of this embodiment.

### [A. Gelatinizer of the present invention]

A gelatinizer according to the present invention contains polysilane resulting from polymerization of (i) a silicon compound with a fluoroalkyl group which has as a side chain a fluoroalkyl group which results from replacement of at least one hydrogen of an alkyl group with fluorine, and (ii) a silicide having as a side chain an alkyl group which may contain fluorine.

More specifically, the gelatinizer according to the present invention contains polysilane has (i) a structure expressed by the following formula (2), 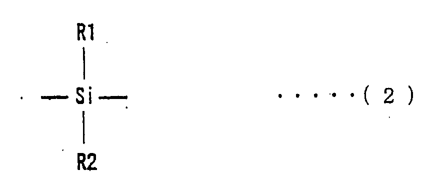 where side chains R1 and R2 are alkyl groups, at least one of which is a fluoroalkyl group which results from replacement of at least one hydrogen of an alkyl group with fluorine,
and (ii) a structure expressed by the following formula (3), 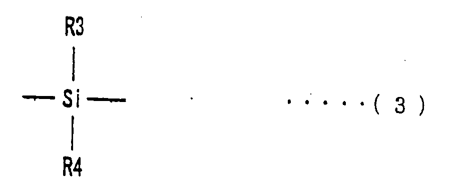 where side chains R3 and R4 are alkyl groups which may contain fluorine, and at least one of them has a different structure to the side chains R1 and R2.

The following embodiment explains a gelatinizer containing polysilane resulting from polymerization of the silicon fluorine compound and the silicide. This gelatinizer has a structure expressed by the following formula (4), 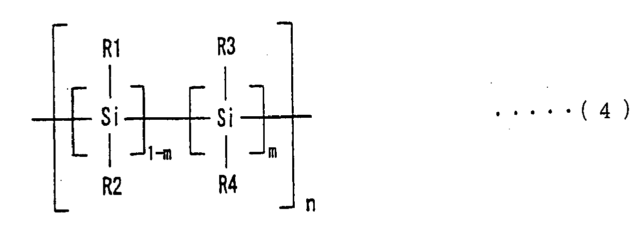 where side chains R1 and R2 are alkyl groups, at least one of which is a fluoroalkyl group which results from replacement of at least one hydrogen of an alkyl group with fluorine; side chains R3 and R4 are alkyl groups which may contain fluorine, at least one of them has a different structure to the side chains R1 and R2; n is an integer not less than 2; and m satisfies 0.001 ≤ m ≤ 0.999.

More specifically, the gelatinizer according to the present embodiment contains polysilane in which the main chain is formed from silicon; the side chains R1 and R2 are alkyl groups, at least one of them is a fluoroalkyl group which results from replacement of at least one hydrogen of an alkyl group with fluorine; side chains R3 and R4 are alkyl groups which may contain fluorine, at least one of them has a different structure to the side chains R1 and R2; n is an integer not less than 2; and m satisfies 0.001 ≤ m ≤ 0.999. In this structure, the two side chain structures, i.e. the structure having R1 and R2, and the structure having R3 and R4, form a block copolymer having a silicon main chain.

The following minutely explains polysilane having the structure of the foregoing general formula (4).

As described, in the polysilane having the structure expressed by the foregoing general formula (4), the side chains R1 and R2 are alkyl groups, at least one of them is a fluoroalkyl group which results from replacement of at least one hydrogen of an alkyl group with fluorine, and side chains R3 and R4 are alkyl groups which may contain fluorine.

It is preferable that the fluoroalkyl group is a trifluoropropyl group. However, the present invention is not only limited to this structure, and the fluoroalkyl group of the present invention may be replaced with other group than trifluoropropyl group. More specifically, any fluoroalkyl group, which results from replacement of at least one hydrogen of an alkyl group with fluorine, is applicable. In the polysilane of the general formula (4), one of the side chains is the fluoroalkyl group while the other is an alkyl group having a β-branch structure and γ-branch structure containing 4 or more carbons. Typical examples of the fluoroalkyl group having a β-branch structure or a γ-branch structure containing 4 or more carbons includes an isobutyl group.

Note that, a part of the hydrogens of the alkyl groups of the side chains R1, R2, R3, and R4 which constitute the structure of the general formula (4) may be replaced with other elements or functional groups than hydrogen. Typical example of the alkyl group includes a chain alkyl group, such as methyl group, ethyl group, butyl group, isobutyl group, isopentyl group, isohexyl group, octyl group, decyl group, dodecyl group, tetradecyl group, hexadecyl group, octadecyl group, dococyl group, hexyl group, vinyl group, or aryl group; a cyclic saturated alkyl group such as cyclohexyl group, cyclopentyl group, cyclohexylmethyl group, cyclohexylethyl group, cyclopentylmethyl group, or cyclopentylethyl group; and an aromatic alkyl group such as phenyl group, tolyl group, naphthyl group, benzyl group, β-phenylethyl group, γ-phenylpropyl group, or δ-phenylbutyl group.

More specifically, in the present embodiment, the foregoing formula (4) may be conditioned so that: m satisfies 0.001≤m≤0.999, R1 is either of an alkyl group (e.g. CH₃, C₂H₅, n-C₃H₇, n-C₄H₉, n-C₅H₁₁, n-C₆H₁₃, n-C₇H₁₅, n-C₈H₁₇, n-C₉H₁₉, n-C₁₀H₂₁, n-C₁₁H₂₃, n-C₁₂H₂₅, n-C₁₃H₂₇, n-C₁₄H₂₀, n-C₁₅H₃₁, n-C₁₆H₃₃, n-C₁₇H₃₅, n-C₁₈H₃₇, n-C₁₉H₃₀, n-C₂₀H₄₁ etc.), aralkyl group {e.g. CH₂CH₂Ph (Ph hereinafter denotes phenyl group), CH₂CH₂CH₂Ph, CH₂CH₂CH₂CH₂Ph etc.}, aryloxyalkyl group (e.g. CH₂CH₂OPh, CH₂CH₂CH₂OPh, CH₂CH₂CH₂CH₂OPh etc.), or an alkyl ether group (e.g. CH₂CH₂OCH₂CH₂OC₂H₅, CH₂CH₂O (CH₂CH₂O)₂C₂H₅ etc.), R2 is a fluoroalkyl group (e.g. trifluoropropyl group), R3 is an alkyl group, and R4 is an isobutyl group.

Further, the recurring number n in the polysilane having the structure expressed by the foregoing formula (4) may be any integer not less than 2, but preferably not more than 1, 000, 000. Polysilane becomes liquid when n falls below 2, and therefore not desirable. Also, when n exceeds 1, 000, 000, the solubility of polysilane decreases, and therefore not desirable.

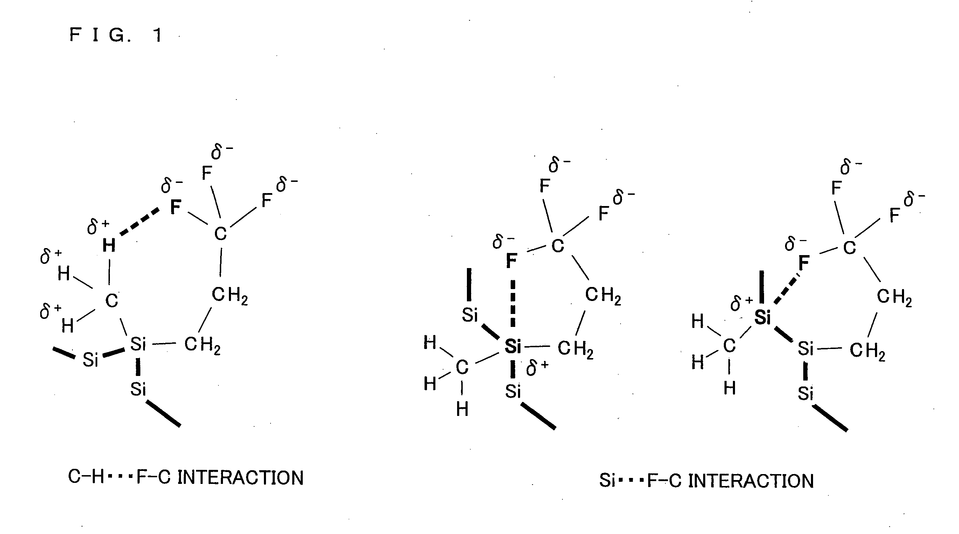

As described, the polysilane has a main chain structure formed of silicon with a side chain containing fluorine. Therefore, in a single molecule of the polysilane, the fluorine (F) in the side chain and the silicon (Si) in the main chain interact with each other in state of Si ··· F-C or the like, and the fluorine (F) and the hydrogen (H) in the side chain interact with each other in state of C-H ··· F-C or the like. Figure 1 is a diagram showing these interactions in a single molecule of the polysilane. As shown in the figure, the fluorine (F) in the trifluoropropyl group and (Si) in the main chain interact with each other, and the fluorine (F) in the trifluoropropyl group and the hydrogen (H) in the lateral methyl chain interact with each other as denoted by the broken line. Note that, in Figure 1, the fluoroalkyl group is a trifluoropropyl group, but this is only an example of polysilane, and the present invention is not limited to this.

With such a composition of polysilane, the gelatinizer of the present invention causes the molecules to interact with each other in the domain of Si ··· F-C interaction in the same manner of the foregoing interaction in a single molecule of the polysilane. In this way ligand crosslinking occurs among polymer chain.

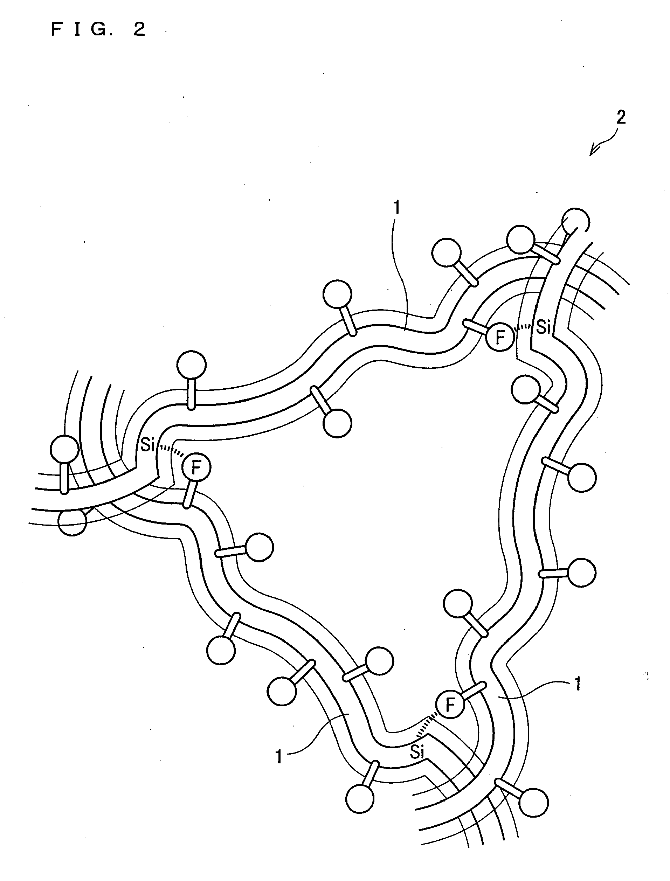

Figure 2 is a diagram showing a state of ligand crosslinking caused by the interaction among polymer chain of the polysilane. As shown in the figure, the gelatinizer 2 according to the present invention causes the molecules interact with each other in the manner of the interaction between fluorine in the side chain and the silicon in the main chain and the interaction of the fluorine and the hydrogen in the side chain in a single molecule of the polysilane. In this way ligand crosslinking occurs among polymer chain, and a network required for gelation is formed. With this network gelation of various kinds of solvent becomes possible.

One specific application example of the gelatinizer of the present embodiment is gelation of an organic solvent. Further, the gelatinizer of the present embodiment forms a network by ligand crosslinking using the interaction between fluorine of the side chain and the silicon of the main chain. Therefore, the gelatinizer of the present invention is capable of gelating an organic solvent (polar solvent) which blocks formation of hydrogen bond.

The conventional gelatinizer for gelating an organic solvent forms the gelation network by hydrogen bond, and therefore incapable of gelating an organic solvent which blocks formation of hydrogen bond (such as polar solvent). In contrast to this conventional gelatinizer for an organic solvent, the gelatinizer according to the present invention forms the gelation network by the interaction between fluorine and silicon. Therefore, the gelatinizer of the present invention is capable of formation of network, in other words, capable of gelation, even with an organic solvent which blocks formation of hydrogen bond (polar solvent).

Note that, the organic solvent which blocks formation of hydrogen bond (polar solvent) may be tetrahydrofuran (THF), chloroform, benzotrifluoride, nitrobenzene, isopropanol, ethanol, methanol or dimethylformamide.

The gelatinizer according to the present embodiment is capable of gelation of polar solvent, which cannot be gelated by the conventional gelatinizer for gelating an organic solvent. Therefore, the gelatinizer according to the present invention is applicable to a larger variation of organic solvent than the conventional gelatinizer.

Further, as described, the conventional gelatinizer for gelating an organic solvent is generally made of a low-molecule compound. Because of this, the organic solvent gel formed by the conventional gelatinizer for gelating an organic solvent tends to change itself into more stable state, such as crystal or precipitation. The crystallisation or precipitation of the resulting gel thus easily occurs, thereby decreasing gelation property.

On the other hand, the gelatinizer according to the present embodiment contains polysilane, which is a polymer chain having a structure denoted by the foregoing general formula (4), has a gelation property for various types of organic solvent. Thus, an organic gel produced by the gelatinizer according to the present invention has a stable polymer chain network. Therefore, the gel produced by a gelatinizer containing polymer chain polysilane having the foregoing structure of general formula (4) is immune to crystallisation or precipitation.

Further, as described, at least one of the side chains of the polysilane having the structure of general formula (4) contains an alkyl group having a β-branch structure or a γ-branch structure containing 4 or more carbons. This polysilane has a greater amount of molecules. Therefore, the gelatinizer containing polysilane having such a structure produces further stable gel.

Accordingly, the gelatinizer according to the present embodiment has superior gelation property compared with the conventional gelatinizer for gelating an organic solvent.

Further, with such a stable gelation state, the resulting gel of gelation using the gelatinizer according to the present embodiment can be easily collected.

Further, the gelatinizer according to the present embodiment contains polymer chain polysilane having the foregoing structure of general formula (4), the resulting gel is likely to be easily collected to be recycled.

More specifically, in the polysilane having the structure denoted by the general formula (4), the main chain structure having silicon has a branch structure, forming a random coil state of molecules, or has a helical stiff structure (stiffness). The "helical structure" denotes a chain whose length is 20nm or longer. The helical structure denotes a structure in which the silicon atoms have repeated alignments of angle θ with respect to the center, when the respective positions of atoms are projected to a plane vertically formed to the polymer axis. That is, the polysilane having the foregoing structure of general formula (4) has a terminal group. The terminal group is generally highly sensitive to ultra violet rays etc. Therefore, the terminal axis is decomposed by ultra violet rays etc., meaning that the structure having the terminal group is also decomposed if the terminal group is irradiated with ultra violet rays etc. Therefore, the polysilane having a terminal group is assumed to be decomposed by irradiation of ultra violet rays or the other kind of light. With such a terminal group, the polysilane is assumed to be easily decomposed by irradiation of ultra violet rays or the like.

More specifically, by irradiating the collected gel with ultra violet, the network formed by the polymer chain polysilane having the foregoing structure of general formula (4) is decomposed. In this manner, the resulting gel of gelation using the gelatinizer according to the present embodiment is decomposed.

With this ultra violet irradiation, the resulting gel of gelation using the gelatinizer according to the present embodiment is converted into liquid again. The polysilane is decomposed at the process of the conversion. Therefore, the gel produced by the gelatinizer according to the present embodiment can be easily converted into liquid again since the polysilane can be decomposed by ultra violet irradiation. In this way the starting solvent can be reproduced out of the resulting gel. The solvent can be recycled. This is desirable for gelation of organic solvent.

For example, in the case where gasoline or petroleum used for fuel of automobiles or ships is runs off, the gelatinizer according to the present embodiment is useful for gelation of the oil. Besides, after the collection, the resulting gel of gelation by the gelatinizer according to the present embodiment can be converted into liquid again by ultraviolet irradiation. The gelatinizer according to the present embodiment thus allows effective use of solvent (oil) instead, of wasting it.

Further, with the effect of converting gel into liquid, the gelatinizer according to the present embodiment is useful for conservation of deleterious substance.

As described, a gelatinizer ensuring reuse of solvent may be produced by a structure in which the polysilane having the foregoing structure of general formula (4) has a terminal group. However, the gelatinizer according to the present invention is not limited to this structure.

If the reuse of solvent is not taken into account, the polysilane having the foregoing structure of general formula (4) may have the following structure.

More specifically, although the gelatinizer of the present embodiment has the foregoing structure in which the polysilane has a terminal group, if the reuse of solvent is not an important factor, the gelatinizer according to the present embodiment may contain polysilane not having a terminal group.

More specifically, the steric structure of the polysilane of general formula (4) may be a cyclic or twin-type cyclic. Here, the cyclic structure designates either of a circle structure in which the main chains of the polysilane constitute a perfect or imperfect circle, or a half-circle structure in which the main chains constitute a half circle. Further, the twin-type cyclic structure designates a structure so-called a "figure 8 double circle (half-circle) structure" in which the polysilane forming a cyclic structure is twisted into a 8-shape. In both these structures, the polysilane does not have a terminal group, and therefore the gelatinizer according to the present embodiment is assumed to be resistant to light, chemical reagent, or heat.

### [B. Production method of Gelatinizer according to the present invention]

Next, the following describes production method of gelatinizer according to the present embodiment. Note that, the following example is a production method of gelatinizer containing polysilane having the structure of the foregoing general formula (4), but the present invention is not limited to this.

As described, the gelatinizer according to the present embodiment contains polysilane having the structure of the foregoing general formula (4).
The polysilane having the structure of the foregoing general formula (4) is synthesized with two monomers: (i) a silicon compound with a fluoroalkyl group which has as a side chain a fluoroalkyl group which results from replacement of at least one hydrogen of an alkyl group with fluorine, and (ii) a silicide having as a side chain an alkyl group which may contain fluorine.

More specifically, the synthesis of the polysilane having the structure of the foregoing general formula (4) is carried out by desalination condensation of the silicon compound with a fluoroalkyl group and the silicide in an organic solvent using an alkali metal or an alloy of alkali metal. Through this method, the polysilane having the structure of the foregoing general formula (4) is obtained.

Further more specifically, as in the later-described Example, one example of polysilane is produced by (i) methyl-3, 3, 3-trifluoropropyl dichloro silane, which is used as the fluoroalkyl group, and (ii) n- decyl isobutyl dichloro silane, which is used as the silicide. In this case, Grignard reagent is first synthesized, and then the n- decyl isobutyl dichloro silane is produced from the reagent. Then, the resulting n- decyl isobutyl dichloro silane and the methyl-3, 3, 3-trifluoropropyl dichloro silane are mixed with an organic solvent, so as to change the concentrations of the respective monomers. As a result, the ratios of the silicon compound with a fluoroalkyl group and the silicide in the polysilane are changed, that is, the value of "m" of the general formula (4) is changed. This process is preferably carried out under a temperature ranging from 60°C to 220°C, more preferably from 90°C to 180°C. If the reaction temperature is less than 60°C, the silicide is not desirably reacted with the alkali metal or the alloy of alkali metal, and the polysilane having the structure of the foregoing general formula (4) is not formed. Further, if the reaction temperature exceeds 220°C, the fluorine of side chain and the alkali metal or the alloy of the alkali metal are reacted with each other, causing olefin bond due to crosslinking reaction or defluorocarbonization (HF).

The reaction formula of such a synthesis of polysilane is expressed by the following general formula (5).

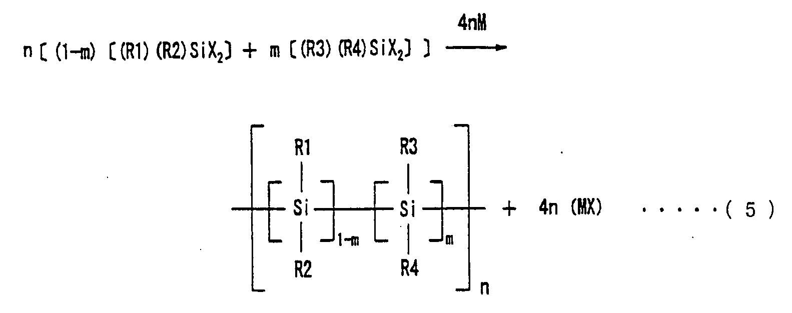

(In the formula, side chains R1 and R2 are alkyl groups, at least one of them is a fluoroalkyl group which results from replacement of at least one hydrogen of the alkyl group with fluorine; side chains R3 and R4 are alkyl groups which may contain fluorine, at least one of them has a different structure to the side chains R1 and R2; n is an integer not less than 2; m satisfies 0.001 ≤ m ≤ 0.999; X denotes halogen; and M denotes alkali metal or an alloy of alkali metal.)Examples of the halogen denoted by "X" contained in the silicides in the general formula (5) includes fluorine (F), chlorine (Cl), bromine (Br), and iodine (I). Among these, chlorine is particularly preferable.

As described, the gelatinizer according to the present embodiment preferably contains polysilane in which at least one of the side chains R1 and R2 is a fluoroalkyl group. Further, it is further preferable that the gelatinizer contains polysilane in which at least one of the side chains R1, R2, R3 and R4 is an alkyl group having a β-branch structure or a γ-branch structure containing 4 or more carbons. That is, in the general formula (5), the silicon compound with a fluoroalkyl group may be structured such that the side chain R1 is a methyl group, and the side chain R2 is a trifluoropropyl group, such as methyl-3, 3, 3-trifluoropropyl dichloro silane (CF₃CH₂CH₂Si(CH₃)Cl₂), as in the later-described Example. Further, in the formula (5), the silicide may be structured such that R3 is a n-alkyl group and R4 is an alkyl group having a β-branch structure or a γ-branch structure containing 4 or more carbons. One example of the silicide may be n- decyl isobutyl dichloro silane (CH₃CH(CH₃)CH₂Si(C₁₀H₂₁)Cl₂). Further, one example of the alkali metal or the alloy of alkali metal, which is denoted by "M" in the figure, may be sodium (Na), potassium (K), rubidium (Rb), sodium-potassium (Na-K) alloy etc. Among these, the sodium-potassium alloy is particularly preferable.

Further, the organic solvent has a boiling point not less than 60°C, but otherwise not particularly limited. However, a solvent having a higher boiling point than that of benzene (80°C) is more preferable. The preferable examples of solvent include a long chain paraffin organic solvent, such as octane, nonane, decane, undecane, dodecane, tetradecane, hexadecane; sis-decalin; trans-decalin etc. If the solvent having a boiling point less than 60°C is used, the reaction temperature must be set at or under 60°C. More specifically, a reaction process must be carried out under 60°C if a solvent having a boiling point of 60°C or less is used; however, the foregoing synthesis process of polysilane requires a reaction process under 60°C or higher. Note that, the monomer concentration of the reaction liquid used for synthesis process is preferably not less than 0.5mol/L, more preferably not less than 1.0mol/L. Further, the mole number of the alkali metal or the alloy of alkali metal is preferably 4 times or greater than the mole number of the monomer.

As described, the gelatinizer according to the present embodiment can be produced in an easy manner than the method of producing the conventional gelatinizer for gelating an organic solvent.

As described earlier, the conventional gelatinizer obtained through gelation of an organic solvent is a low-molecule compound, and therefore its production (synthesis) is complicated, and requires many separate processing steps. Because of the many processing steps the production takes a long time, resulting in low efficiency and a low yield. Therefore, the gelatinizer according to the present embodiment manufactured through such an easy method has a certain advantage such as mass production. The mass production results in a great decrease in cost compared to the conventional gelatinizer for producing organogel.

Accordingly, in contrast to the conventional gelatinizer for gelating an organic solvent, the production method of gelatinizer according to the present embodiment allows mass production at a lower cost.

The present invention is not limited to the description of the embodiments above, but may be altered within the scope of the claims.

The foregoing embodiment describes the gelatinizer containing polysilane produced by polymerization of (i) a silicon compound with a fluoroalkyl group which has as a side chain a fluoroalkyl group which results from replacement of at least one hydrogen of an alkyl group with fluorine, and (ii) a silicide having as a side chain an alkyl group which may contain fluorine. However, the gelatinizer of the present invention is not limited to this, but may contain polysilane produced by polymerization of (i) a silicon compound with a fluoroalkyl group which has as a side chain at least one fluoroalkyl group which results from replacement of at least one hydrogen of an alkyl group with fluorine.

Specifically, the gelatinizer contains polysilane which has a structure expressed by the following formula (1), 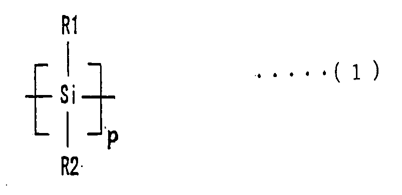 where side chains R1 and R2 are alkyl groups, at least one of them is a fluoroalkyl group which results from replacement of at least one hydrogen of the alkyl group with fluorine, and p expresses an integer not less than 6. The fluoroalkyl group is preferably a trifluoropropyl group.

Also in this case, it is preferable that one of the side chains is the fluoroalkyl group while the other is an alkyl group having a β-branch structure or a γ-branch structure containing 4 or more carbons.

The following more specifically explains the present invention with some concrete examples. The present invention is however not limited to the examples. The following Example was carried out particularly to find out the gelation property with respect to an organic solvent.

### [Example]

The following more specifically explains the gelatinizer of the present invention with a concrete gelatinizer example. This gelatinizer is made of polysilane obtained through copolymerization of a monomer of n- decyl isobutyl dichloro silane and a monomer of methyl-3, 3, 3-trifluoropropyl dichloro silane.

### (Synthesis of Grignard reagent)First, Grignard reagent is synthesized as follows.

A reaction device (e.g. a three-necked 300mL flask having been dried) was prepared, and magnesium was put into the flask. The amount of magnesium was adjusted at a ratio of 1.3 equivalent weight (3.28g (0.135mol) in this Example) with respect to the amount of isobutyl dichloro silane which was added later. The flask was then dried in vacuum and subjected to nitrogen replacement so that the system was set under nitrogen atmosphere. Then 80mL of THF (tetrahydrofuran) was added, and the mixture was stirred in an oil bath at 80°C. After bubbles were generated, a small amount of 1.2-dibromobutane was added and stirred so as to activate the magnesium surface. After that, 1-bromodecane was slowly dropped in. The amount of 1-bromodecane was adjusted at a ratio of 1.1 equivalent weight (25.2g (0. 1 14mol) in this Example) with respect to the amount of isobutyl dichloro silane which was added later. After dropping in the whole amount, the mixture was stirred. A Grignard reagent was thus obtained.

The reaction formula of this synthesis process is shown in the following general formula (6).

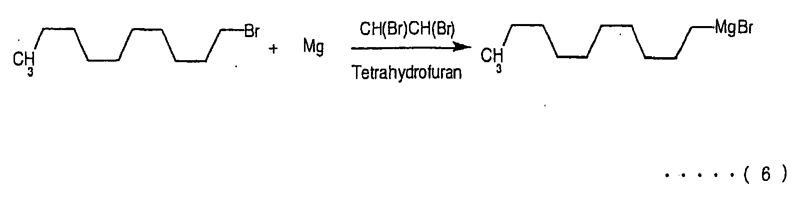

### (Synthesis of n- decyl isobutyl dichloro silane)

Next, with the Grignard reagent obtained above, n- decyl isobutyl dichloro silane was synthesized.

Another reaction device (e.g. a three-necked 300mL flask having been dried) was prepared, and the device was dried in vacuum and subjected to nitrogen replacement so that the system was set under nitrogen atmosphere. Then 20g (0.104mol) of isobutyldichlorosilane and 80mL of THF (tetrahydrofuran) was added, and the mixture was stirred while being heated in an oil bath at 80°C. The Grignard reagent synthesized above was put into a dropping funnel, and then was slowly dripped into the flask. After dropping the whole amount of reagent, the mixture was stirred for an hour, and the solvent was removed by vacuum distillation, and a crude product was obtained by vacuum filtration. Using a vacuum distillation device, the crude product was separated into n-decyl-isobutyldichlorosilane and the n-decyl-trichlorosilane (0.8mHg) which differ in boiling point, and respective monomers are obtained (the boiling point of n-decyl-isobutyldichlorosilane = 100°C (0.8mHg), the boiling point of n-decyl-trichlorosilane = 130°C (0.8mHg)). The reaction formula of this synthesis process is shown in the following general formula (7).

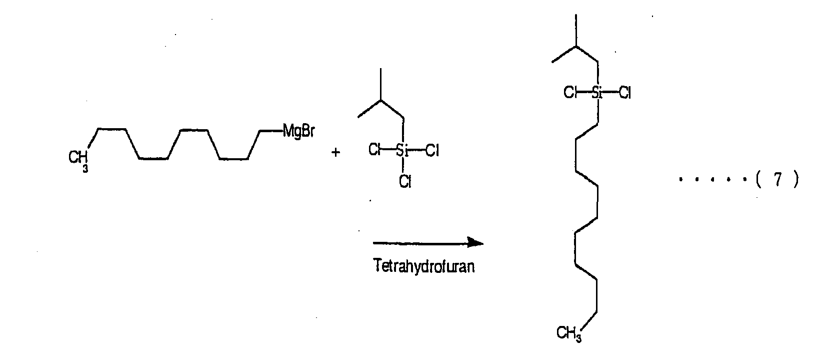

### (Copolymerization of n- decyl isobutyl dichloro silane and methyl-3, 3, 3-trifluoropropyl dichloro silane)

A reaction device (e.g. a three-necked 300mL flask having been dried) was prepared, and the device was dried in vacuum and subjected to nitrogen replacement so that the system was set under nitrogen atmosphere. Then 4 equivalent weight (0.84g (0.036mol) in this Example) of sodium with respect to the total amount of monomers of n- decyl isobutyl dichloro silane and methyl-3, 3, 3-trifluoropropyl dichloro silane, and 8mL of toluene were put into the flask and stirred while being heated in an oil bath at 120°C until the sodium was crushed into powder.

Next, the n- decyl isobutyl dichloro silane (9.1×10⁻³mol) and the methyl-3, 3, 3-trifluoropropyl dichloro silane (9.1×10⁻³mol) each in 1 equivalent amount were dissolved in 2mL of toluene. The solution was put into a dropping funnel.

A few drops of solution in which the two kinds of monomers are dissolved was dropped into the solution of sodium and toluene. After the color of reaction solution was turned into violet, the remaining monomers were added. After dropping in the whole monomers, the mixture was stirred for two hours, and 80mL of toluene was added to complete the reaction. The pressure filtration was performed, and 200mL of isopropanol was added to the solution so as to precipitate the target copolymer (polysilane). The precipitated copolymer was collected and dried in vacuum at 70°C.

The reaction formula of this copolymerization process is shown in the following general formula (8).

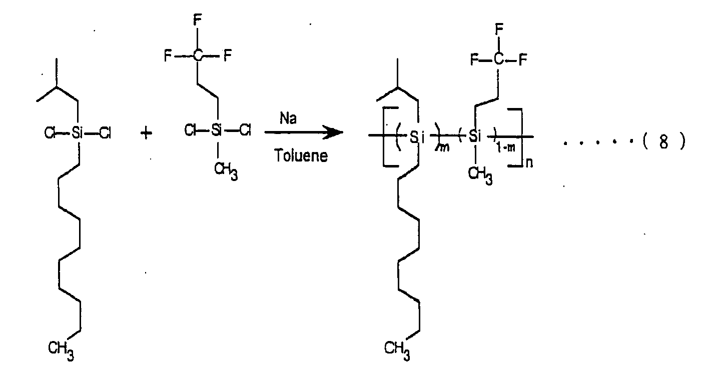

The polysilane (gelatinizer) obtained through the above process was measured for several factors. Table 1 shows the result.

**[Table 1]**

| | Amount Produced (mg) | Yield (%) | Mean Molecular Weight (Mw) | Molecular Weight Distribution (Mw/Mn) |
|---|---|---|---|---|
| Sample 1 | 110 | 6.00 | 6.13×10⁵ | 3.05 |
| Sample 2 | 32.5 | 1.15 | 1.21×10⁶ | 2.20 |

### (Measurement of gelation property)

Next, the gelatinizer made of polysilane produced by the foregoing method was measured for the gelation property with respect to various organic solvents. The following describes the respective steps of measurement.

The measurement was carried out as follows. The polysilane (gelatinizer) obtained in the foregoing manner and one of the following various organic solvents were mixed in a light-shielding micro tube. The mixture was placed still under room temperature for 24 hours. Thereafter, the micro tube was turned bottom up, and after another 30 minutes each sample was visually observed. For the samples 1 and 2, 14wt% and 10wt% of gelatinizer were used, respectively. In the sample 1, 60µL of one of the following organic solvents was mixed with 2.5mg of polysilane.

The Table 2 shows the conservation results.

**[Table 2]**

| | Solvent | Sample | |
|---|---|---|---|
| | | 1 | 2 |
| Aliphatic Series | n-Decane | VS | G |
| | n-Octane | VS | G |
| | n-Hexan | PG | G |
| | n-Pentane | G | G |
| Aromatic Series | Cyclohexan | PG | G |
| | Toluen | G | G |
| | Benzene | G | G |
| | Benzotrifluoride | S | S |
| Alcohol | Isopropanol | I | I |
| | Ethanol | I | I |
| | Methanol | I | I |
| Ester | Ethyl Acetate | I | I |
| Acid | Acetic Acid | I | I |
| | CHCl3 | G | G |
| | THF | G | G |
| | Acetone | I | I |
| Others | 1,4-Dioxan | I | I |
| | DMF | I | I |
| | DMSO | I | I |
| | Silicon Oil | I | I |

"G" denotes completion of gelation, "PG" denotes partial gelation, "VS" denotes sticky liquid state (sol state), "S" denotes swelling by moisture, "I" denotes no gelation

The results show that the gelatinizer of the present invention worked for gelation of various aliphatic carbon hydrates such as n-octane, n-pentane, or cyclohexane; aromatic solvents such as benzene, or toluene; and polar organic solvents such as THF, or chloroform. Note that, in the present Example, "gelation" was defined by non-fluidability after 30 minutes since the micro tube was turned bottom up.

Thus it was found that the gelatinizer of the present invention worked for gelation of not only various organic solvents but also polar organic solvents such as THF, or chloroform.The embodiments and concrete examples of implementation discussed in the foregoing detailed explanation serve solely to illustrate the technical details of the present invention, which should not be narrowly interpreted within the limits of such embodiments and concrete examples, but rather may be applied in many variations within the spirit of the present invention, provided such variations do not exceed the scope of the patent claims set forth below.

### INDUSTRIAL APPLICABILITY

The gelatinizer of the present invention ensures gelation property not only for various organic solvent but also polar organic solvents which have not been gelated by the conventional gelatinizer for producing organogel. Further, the gelatinizer of the present invention may be produced though an easy synthesis process. Therefore, compared with the conventional gelatinizer for producing organogel, the gelatinizer of the present invention was easily produced by mass production at a lower cost.

Further, the gelatinizer of the present invention is also useful for environmental pollution by organic solvents, such as runoff of gasoline or petroleum from automobiles or ships.

Further, the gels of various organic solvent produced by the gelatinizer of the present invention are applicable for a thermal storage medium.

## Claims

1. A gelatinizer containing polysilane resulting from polymerization of a silicon compound with a fluoroalkyl group which has as a side chain a fluoroalkyl group which results from replacement of at least one hydrogen of an alkyl group with fluorine.

2. The gelatinizer as set forth in claim 1,
wherein:
the polysilane has a structure expressed by the following formula (1), 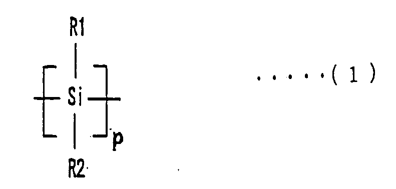
where side chains R1 and R2 are alkyl groups, at least one of which is a fluoroalkyl group which results from replacement of at least one hydrogen of an alkyl group with fluorine, and p expresses an integer not less than 6.

3. The gelatinizer as set forth in claim 1 or 2,
wherein:
one of the side chains is the fluoroalkyl group while the other is an alkyl group having a β-branch structure or a γ-branch structure containing 4 or more carbons.

4. A gelatinizer containing polysilane resulting from polymerization of (i) a silicon compound with a fluoroalkyl group which has as a side chain a fluoroalkyl group which results from replacement of at least one hydrogen of an alkyl group with fluorine, and (ii) a silicide having as a side chain an alkyl group which may contain fluorine.

5. The gelatinizer as set forth in claim 4, wherein:
the polysilane has (i) a structure expressed by the following formula (2), 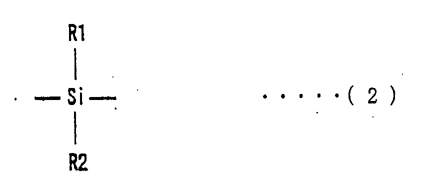
where side chains R1 and R2 are alkyl groups, at least one of which is a fluoroalkyl group which results from replacement of at least one hydrogen of an alkyl group with fluorine,
and (ii) a structure expressed by the following formula (3), 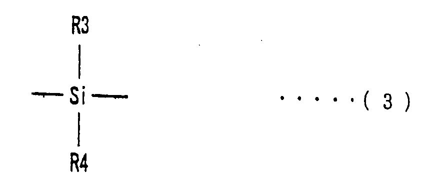 where side chains R3 and R4 are alkyl groups which may contain fluorine, and at least one of them has a different structure to the side chains R1 and R2.

6. The gelatinizer as set forth in claim 4 or 5,
wherein:
one of the side chains is the fluoroalkyl group while the other is an alkyl group having a β-branch structure and γ-branch structure containing 4 or more carbons.

7. The gelatinizer as set forth in claim 4, 5 or 6,
wherein:
the polysilane has a structure expressed by the following formula (4), 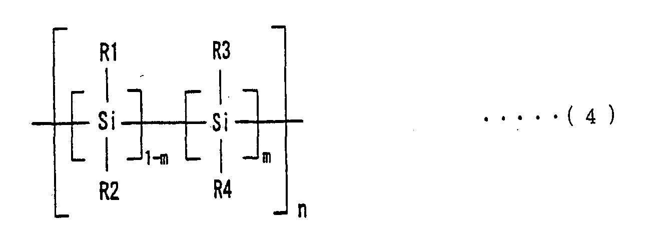
where side chains R1 and R2 are alkyl groups, at least one of which is a fluoroalkyl group which results from replacement of at least one hydrogen of an alkyl group with fluorine; side chains R3 and R4 are alkyl groups which may contain fluorine, at least one of them has a different structure to the side chains R1 and R2; n is an integer not less than 2; and m satisfies 0.001 ≤ m ≤ 0.999.

8. The gelatinizer as set forth in any one of claims 1 through 7, wherein:
the fluoroalkyl group is a trifluoropropyl group.

9. A gel containing a solvent and the gelatinizer as set forth in any one of claims 1 through 8.

10. The gel as set forth in claim 9,
wherein:
the solvent is an organic solvent.

11. The gel as set forth in claim 10, wherein:
the organic solvent is an polar solvent of ether.

12. The gel as set forth in claim 10, wherein:
the organic solvent is an polar solvent of alkyl halide.
